# EUROPÄISCHE PATENTSCHRIFT

(11) **EP 2 700 747 B1**
(45) Veröffentlichungstag und Bekanntmachung des Hinweises auf die Patenterteilung: **09.12.2015**
(21) Anmeldenummer: 13179966.0
(22) Anmeldetag: 09.08.2013
(51) Int. Cl.: E01C 23/088, B60G 3/01, B62D 7/04, B62D 11/20

(54) **Straßenfräsmaschine zum Bearbeiten von Straßenbelägen, sowie Verfahren zum Verschwenken eines Laufwerks einer Straßenfräsmaschine**
Road milling machine for machining road surfaces, and method for pivoting an undercarriage of a road milling machine
Machine à fraiser la chaussée destinée au traitement de revêtements routiers et procédé de basculement d'un train de roulement d'une machine à fraiser la chaussée

(30) Priorität: 22.08.2012 DE 102012214929
(43) Veröffentlichungstag der Anmeldung: 26.02.2014
(73) Patentinhaber: Wirtgen GmbH, 53578 Windhagen (DE)
(72) Erfinder: Berning, Christian, 50321 Brühl (DE); Stinner, Tobias, 57635 Weyerbusch (DE); Vogt, Andreas, 53567 Asbach (DE); Barimani, Cyrus, 53639 Königswinter (DE); Hähn, Günter, 53639 Königswinter (DE)
(74) Vertreter: Von Kreisler Selting Werner - Partnerschaft von Patentanwälten und Rechtsanwälten mbB

(56) Entgegenhaltungen:
- DE-U1- 29 924 566

## Beschreibung

Die Erfindung betrifft eine Straßenfräsmaschine zum Bearbeiten von Straßenbelägen nach dem Oberbegriff des Anspruchs 1, sowie ein Verfahren zum Verschwenken eines Laufwerks einer Straßenfräsmaschine nach dem Oberbegriff des Anspruchs 10.

Eine Straßenfräsmaschine ist beispielsweise aus der EP 916 004 A oder der DE 299 24 566 U1 bekannt.

Eine derartige Straßenfräsmaschine weist eine von einer Bedienungsperson betätigte Steuerung für den Fahr-, Lenk- und Fräsbetrieb auf und ist mit einem über Hubsäulen höhenverstellbaren Maschinenrahmen versehen.

An den unteren Enden der Hubsäulen sind Laufwerke angeordnet, die als Radlaufwerke oder Kettenlaufwerke ausgestaltet sein können. Dabei ist auch eine Mischung von Rad- und Kettenlaufwerken möglich.

An dem Maschinenrahmen ist eine um eine Achse drehbare Arbeitswalze angeordnet.

Mindestens eine der hinteren Hubsäulen mit daran befestigtem Laufwerk ist mit Hilfe eines Schwenkarms von einer ersten, relativ zu dem Maschinenrahmen seitlich vorstehenden äußeren Endposition in eine zweite innere Endposition, ganz oder teilweise innerhalb des Maschinenrahmens, verschwenkbar. Die Innenposition wird benötigt, um mit der sogenannten Nullseite der Straßenfräsmaschine möglichst nahe an Hindernissen vorbeifahren zu können, wobei die Nullseite einer Straßenfräsmaschine diejenige Seite ist, an der eine Stirnseite der Arbeitswalze möglichst nah an die Außenseite der Straßenfräsmaschine heranreicht.

Das schwenkbare Laufwerk ist auch mit einer Lenkeinrichtung versehen, die einen von einer Geradeausfahrt abweichenden Lenkwinkel für das Laufwerk einstellen kann. Für den Antrieb des Schwenkarms und für den Antrieb der Lenkeinrichtung ist jeweils eine Antriebseinrichtung vorgesehen.

Bei derartigen Straßenfräsmaschinen muss ungeachtet dessen, ob die Hubsäule von einem einzigen Schwenkarm oder von zwei parallelogrammartig angelenkten Schwenkarmen oder auf andere Weise geführt wird, das Laufwerk angehoben werden, um es von einer Endposition in die andere Endposition zu bringen. Hierzu muss zunächst der Maschinenrahmen zumindest an den hinteren Laufwerken so weit angehoben werden, bis die Arbeitswalze einen gewissen Abstand von der Straßenoberfläche hat. Dann muss zum Schutz der Arbeitswalze z. B. ein Holzbalken unter die Arbeitswalze geschoben werden, damit diese nicht auf dem Boden aufliegt und möglicherweise die Fräsmeißel beschädigt werden, wenn das schwenkbare Laufwerk hochgefahren wird, um es ohne Bodenkontakt verschwenken zu können.

Der Erfindung liegt nunmehr die Aufgabe zugrunde, eine Straßenfräsmaschine und ein Verfahren zum Verschwenken eines Laufwerks einer Straßenfräsmaschine anzugeben, die einerseits konstruktiv vereinfacht ist und andererseits einfacher und schneller zu bedienen ist.

Zur Lösung dieser Aufgabe dienen die Merkmale des Anspruchs 1 bzw. 10.

Die Erfindung sieht in vorteilhafter Weise vor, dass der Fahrantrieb für das schwenkbare Laufwerk die erste Antriebseinrichtung für die Schwenkbewegung des Schwenkarms bildet. Es ist somit vorgesehen, dass der Schwenkarm keine separate eigene Antriebseinrichtung aufweist, und dass der Fahrantrieb dazu genutzt wird, den Schwenkarm mit der Hubsäule und dem Laufwerk unter Bodenkontakt des Laufwerks zu verschwenken. Infolgedessen ist es nicht mehr notwendig, den Maschinenrahmen der Straßenfräsmaschine anzuheben und eine Schutzvorrichtung unter der Fräswalze anzuordnen, um dann das schwenkbare Laufwerk außer Bodenkontakt bringen zu können. Vielmehr ist es lediglich notwendig, dass sich die Arbeitswalze nicht mehr im Schnitt befindet, der Bodenkontakt des schwenkbaren Laufwerks bleibt dagegen erhalten und wird sogar benötigt, um die Schwenkbewegung ausführen zu können.

Die Steuerung kann den Fahrantrieb und den Lenkwinkel für das schwenkbare Laufwerk derart koordinieren, dass das Laufwerk unter permanentem Bodenkontakt auf einem Kreisbogen von der ersten relativ zu dem Maschinenrahmen vorstehenden äußeren Endposition, in die zweite innere Endposition und zurück überführbar ist. Dabei kann die Steuerung zum Überführen des Laufwerks von einer Endposition in die andere, die Lenkeinrichtung automatisch ansteuern bis das Laufwerk im Wesentlichen orthogonal zum Schwenkarm ausgerichtet ist. In dieser Position betätigt die Steuerung automatisch den Fahrantrieb, um die Schwenkbewegung des Schwenkarms zur anderen Endposition auszuführen, um dann in der anderen Endposition erneut die Lenksteuerung anzusteuern, bis das Laufwerk wieder für eine Geradeausfahrt ausgerichtet ist.

Vorzugsweise ist vorgesehen, dass die schwenkbare Hubsäule über einen einzigen Schenkwarm mit dem Maschinenrahmen gekoppelt ist. Eine derartige Lösung benötigt weniger Maschinenelemente und kann verwindungssteifer ausgeführt werden.

Die Lenkachse des Laufwerks zur Einstellung des Lenkwinkels kann koaxial oder parallel zur Längsachse der Hubsäule sein.

Bei einem bevorzugten Ausführungsbeispiel ist die schwenkbare Hubsäule in mindestens einer der Endpositionen verriegelbar.

Die schwenkbare Hubsäule kann einen in Längsrichtung ortsfest mit dem Maschinenrahmen verbundenen oberen Teil und einen teleskopisch herausfahrbaren unteren Teil aufweisen, an dessen unterem Ende das Laufwerk befestigt ist.

Dabei kann die Lenkeinrichtung mit dem ausfahrbaren unteren Teil der Hubsäule drehfest gekoppelt sein.

Das Laufwerk, die Hubsäule oder die Lenkeinrichtung können erste, in der inneren Endposition mit dem Maschinenrahmen zusammenwirkende Verriegelungseinrichtungen aufweisen, die einerseits den seitlichen Abstand B des Laufwerks zu dem Maschinenrahmen fixieren und andererseits die Einstellung eines Lenkwinkels zulassen.

Das Laufwerk, die Hubsäule oder die Lenkeinrichtung können zweite, in der äußeren Endposition mit dem Maschinenrahmen zusammenwirkende Verriegelungseinrichtungen aufweisen, die sowohl den seitlichen Abstand A des Laufwerks von dem Maschinenrahmen als auch den Lenkwinkel des Laufwerks orthogonal zur Arbeitswalzenachse fixieren.

In der inneren Endposition ist es somit möglich, die seitliche Lage der Hubsäule zu dem Maschinenrahmen zu fixieren, aber dennoch eine Lenkung des Laufwerks zu ermöglichen, während in der äußeren Endposition nicht nur der seitlichen Abstand zum Maschinenrahmen, sondern auch der Lenkwinkel für eine Ausrichtung parallel zur Längsachse des Maschinenrahmens bzw. orthogonal zur Arbeitswalzenachse fixiert werden kann.

Besonders vorteilhaft kann die Verriegelungseinrichtung an einer Lenkeinrichtung, vorzugsweise an dem Lenkring der Lenkeinrichtung angeordnet sein.

Die ersten und zweiten Verriegelungseinrichtungen können Aussparungen in einem Lenkring der Lenkeinrichtung aufweisen, in die jeweils mindestens ein von dem Maschinenrahmen abstehendes Eingriffselement, z.B. ein Bolzen eingreift, oder mindestens ein an dem Lenkring befestigten Eingriffselement, z.B. einem Bolzen aufweisen, das in Aussparungen des Maschinenrahmens eingreift.

Dabei können die Aussparungen einseitig offen sein, so dass die Eingriffselemente, z.B. Bolzen, in die Aussparungen einführbar sind.

Bei einer besonders bevorzugten Ausführungsform ist vorgesehen, dass die erste und zweite Antriebseinrichtung das Laufwerk unter Beibehaltung der Laufrichtung des Laufwerks von der ersten äußeren Endposition in die zweite innere Endposition und zurück überführen kann. Die Lenkeinrichtung wird hierzu in einer der Endpositionen derart angesteuert, dass die Laufrichtung des Laufwerks erhalten bleibt. Eine Drehrichtungsumkehr des Fahrantriebs ist dann nicht mehr erforderlich.

Die Aufgabe gemäß dem Verfahren wird mit den Merkmalen des Anspruchs 10 gelöst, nämlich die Verwendung des Fahrantriebs für das schwenkbare Laufwerk zum Verschwenken des Schwenkarms unter permanentem Bodenkontakt von einer Endposition in die jeweils andere Endposition.

Das Überführen des Laufwerks von einer Endposition in die andere erfolgt durch Koordinieren des Lenkwinkels und zumindest des Fahrantriebs für das schwenkbare Laufwerk, wobei das Laufwerk entlang eines Kreisbogens mit dem Radius des Schwenkarms von der ersten äußeren Endposition in die zweite innere Endposition und zurück überführt werden kann.

Hierzu wird zunächst das Laufwerk ausgehend von der ersten Endposition im Wesentlichen orthogonal zum Schwenkarm bzw. zum Radius des Schwenkarms ausgerichtet, dann der Fahrantrieb zumindest des schwenkbaren Laufwerks angesteuert, um die Schwenkbewegung des Schwenkarms zur anderen Endposition auszuführen. Anschließend wird das Laufwerk in der anderen Endposition wieder in seine neutrale Geradeausrichtung eingestellt, nämlich eine Ausrichtung parallel zum Maschinenrahmen und orthogonal zur Arbeitswalzenachse.

Das Laufwerk kann in der inneren Endposition verriegelt werden, wobei der seitliche Abstand B des Laufwerks von dem Maschinenrahmen unter Beibehaltung der Einstellmöglichkeit eines Lenkwinkels fixiert wird.

Das Laufwerk kann in der äußeren Endposition verriegelt werden, wobei der seitliche Abstand A des Laufwerks von dem Maschinenrahmen und ein Lenkwinkel orthogonal zur Arbeitswalzenachse fixiert werden.

Zur Verriegelung des schwenkbaren Laufwerks in den Endpositionen kann ein zur Lenkung mit der Hubsäule zusammenwirkender Lenkring verwendet werden.

In den Endpositionen kann die schwenkbare Hubsäule durch ein Verschwenken des Laufwerks um eine Lenkachse zur Einstellung des Lenkwinkels verriegelt werden. Demzufolge kann die Lenkeinrichtung auch zum Verriegeln der Hubsäule am Maschinenrahmen eingesetzt werden.

Während des Schwenkvorgangs der schwenkbaren Hubsäule kann zumindest der Fahrantrieb des schwenkbaren Laufwerks unter Vorwärts- oder Rückwärtsfahrt koordiniert angesteuert werden.

Es versteht sich, dass zusätzlich auch die Fahrantriebe des verbliebenen hinteren Laufwerks und/oder der vorderen Laufwerke angesteuert werden können.

Im Folgenden wird unter Bezugnahme auf die Zeichnungen ein Ausführungsbeispiel der Erfindung näher erläutert.

Es zeigen:
- Fig. 1: eine Straßenfräsmaschine mit schwenkbarem Laufwerk in der Seitenansicht,
- Fig. 2: die Straßenfräsmaschine gemäß Fig. 1 in Draufsicht,
- Fig. 3: eine perspektivische Ansicht eines Laufwerks in Form eines Stützrades,
- Fig. 4: die Schwenk- und Lenkbewegung des Stützrades gemäß Fig. 3, und
- Fig. 5: einen Schnitt durch die Hubsäule in den jeweiligen Endpositionen.

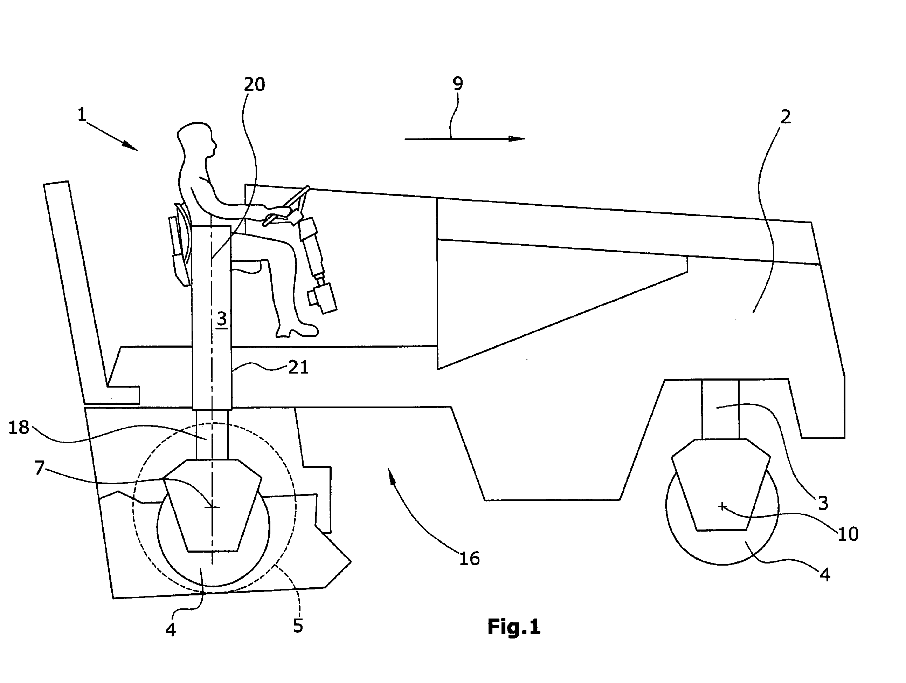

Fig. 1 zeigt eine selbstfahrende Straßenfräsmaschine 1 mit einem Maschinenrahmen 2, der über Hubsäulen 3 höhenverstellbar ist. Eine Arbeitswalze 5 ist um eine Arbeitswalzenachse 7 drehbar am Maschinenrahmen 2 gelagert und wird üblicherweise gemeinsam mit dem Maschinenrahmen 2 angehoben oder abgesenkt. Alternativ kann die Arbeitswalze 5 auch selbst gegenüber dem Maschinenrahmen 2 höhenverstellbar sein.

Die Hubsäulen 3 können sowohl an der Hinterachse 8 als auch an der Vorderachse 10 vorgesehen sein. Die Arbeitswalzenachse 7 verläuft vorzugsweise in der gleichen vertikalen Ebene wie die Hinterachse 8 der hinteren Laufwerke 4.

In den Fign. 1 bis 5 sind die Laufwerke 4 als Radlaufwerke dargestellt. Sie können alle oder einzeln gegen Kettenlaufwerke ausgetauscht werden.

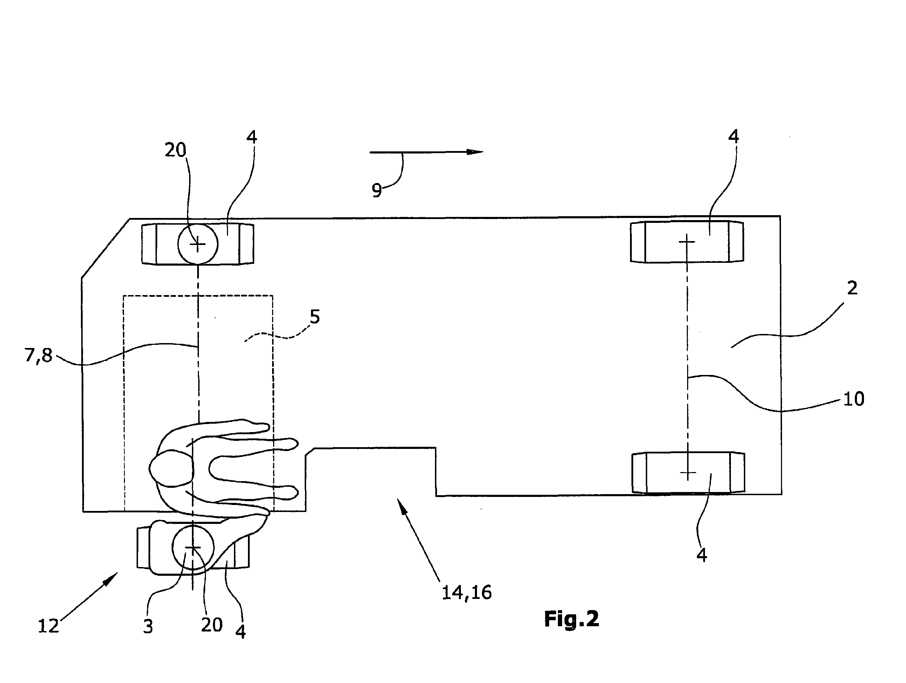

Die Laufwerke 4 sind an den unteren Enden 18 der Hubsäulen 3 angeordnet. In der normalen Betriebsposition, die aus Fig. 2 ersichtlich ist, verläuft die Hinterachse 8 koaxial zu den Achsen der hinteren Radlaufwerke 4 und in der gleichen vertikalen Ebene wie die Arbeitswalzenachse 7 und die Längsachsen 20 der hinteren Hubsäulen 3.

Wie aus Fig. 2 ersichtlich, sind in dem Ausführungsbeispiel insgesamt vier Radlaufwerke vorgesehen, die den Maschinenrahmen 2 tragen. Die vorderen Radlaufwerke können auch durch ein einziges mittleres Radlaufwerk substituiert werden.

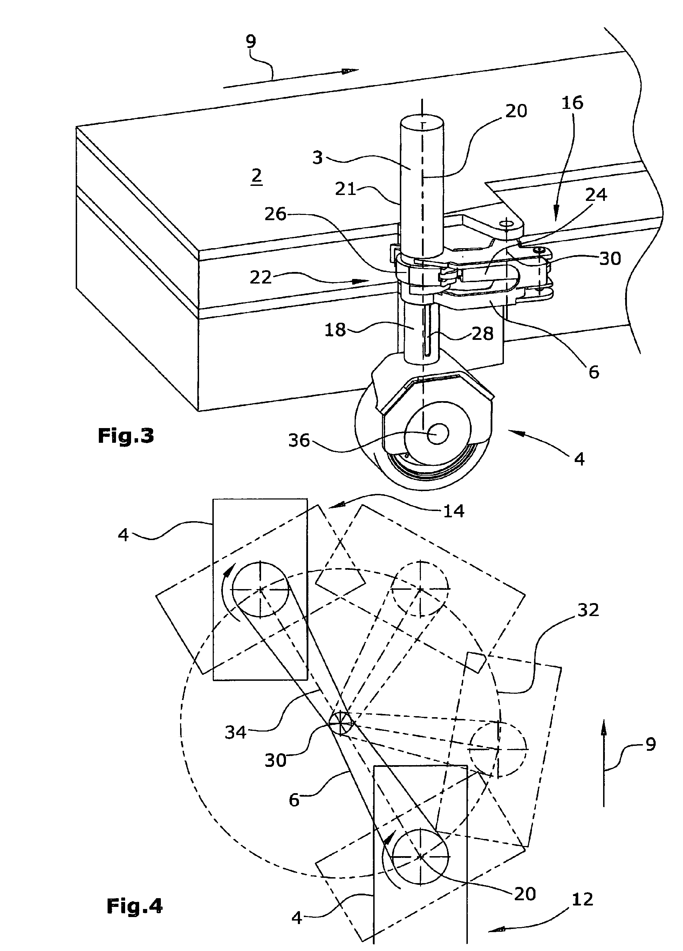

Das hintere in Fahrtrichtung 9 rechts befindliche Laufwerk 4 kann ausgehend von der normalen Betriebsposition, wie in Fig. 2 dargestellt, von einer ersten äußeren Endposition 12 in eine innere zweite Endposition 14 verschwenkt werden, in der sich das Laufwerk 4 im Wesentlichen innerhalb einer Aussparung 16 des Maschinenrahmens 2 befindet. In der inneren Endposition 14 kann die Straßenfräsmaschine 1 mit ihrer Arbeitswalze 5 dicht an Hindernissen vorbeigeführt werden. Fig. 3 zeigt eine perspektivische Ansicht der an einem Schwenkarm 6 an dem Maschinenrahmen 2 angelenkten Hubsäule 3 mit dem Radlaufwerk 4. An dem unteren Teil 18 der Hubsäule 3 ist das Radlaufwerk 4 höhenverstellbar montiert. Das Radlaufwerk 4 ist um die Längsachse 20 der Hubsäule 3 mit Hilfe einer Lenkeinrichtung 22 lenkbar. Der untere Teil 18 der Hubsäule 3 ist daher in dem oberen Teil der Hubsäule 3 drehbar und höhenverstellbar gelagert.

Die Lenkeinrichtung 22 weist einen Lenkzylinder 24 auf, der in dem Schwenkarm 6 angeordnet ist und auf einen Lenkring 26 einwirken kann, der in eine Nut 28 der Hubsäule 3 eingreifen kann, so dass das Laufwerk 4 um die Längsachse 20 der Hubsäule 3 zum Lenken verschwenkt werden kann. Die Längsachse 20 bildet demzufolge in den gezeigten Ausführungsbeispielen die Lenkachse für das Laufwerk 4.

Der Schwenkarm 6 ist um eine am Maschinenrahmen 2 gelagerte Schwenkachse 30, die parallel zur Längsachse 20 der Hubsäule 3 verläuft, verschwenkbar.

Fig. 4 zeigt den Bewegungsablauf des Radlaufwerks von der ersten äußeren Endposition 12 in die zweite innere Endposition 14 in der Aussparung 16 des Maschinenrahmens 2.

Wie aus Fig. 4 ersichtlich, wird das Verschwenken des Laufwerks 4 dadurch eingeleitet, dass mit Hilfe der Lenkeinrichtung 22 das Radlaufwerk soweit gedreht wird, bis es orthogonal zu dem Schwenkradius 34 des Schwenkarms 6 steht. Dann wird der Fahrantrieb 36 des Radlaufwerks angesteuert und das Radlaufwerk entlang des Kreisbogens 32 mit dem Schwenkradius 34 in die zweite Endposition 14 gefahren, in der erneut die Lenkeinrichtung 22 betätigt wird, um das Radlaufwerk 4 wieder in Fahrtrichtung 9 auszurichten.

Wenn die Fahrtrichtung 9 des Radlaufwerks beibehalten wird, kann auf eine Drehrichtungsumkehr des Fahrantriebs 36 verzichtet werden.

Aufgrund der koordinierten oder sequentiellen Betätigung der Steuerung der Lenkeinrichtung 22 und des Fahrantriebs 36 ist ein Verschwenken des Laufwerks 4 ohne eine separate Antriebseinrichtung für den Schwenkarm 6 und unter Beibehaltung des Bodenkontaktes des Laufwerks 4 möglich. Die Bewegung kann koordiniert oder auch sequentiell erfolgen, d. h. erst lenken, dann auf dem Kreisbogen verfahren (schwenken) und dann wieder lenken. Im Falle einer koordinierten Steuerung können die genannten sequentiellen Schritte auch teilweise gleichzeitig, d. h. auch überlappend stattfinden.

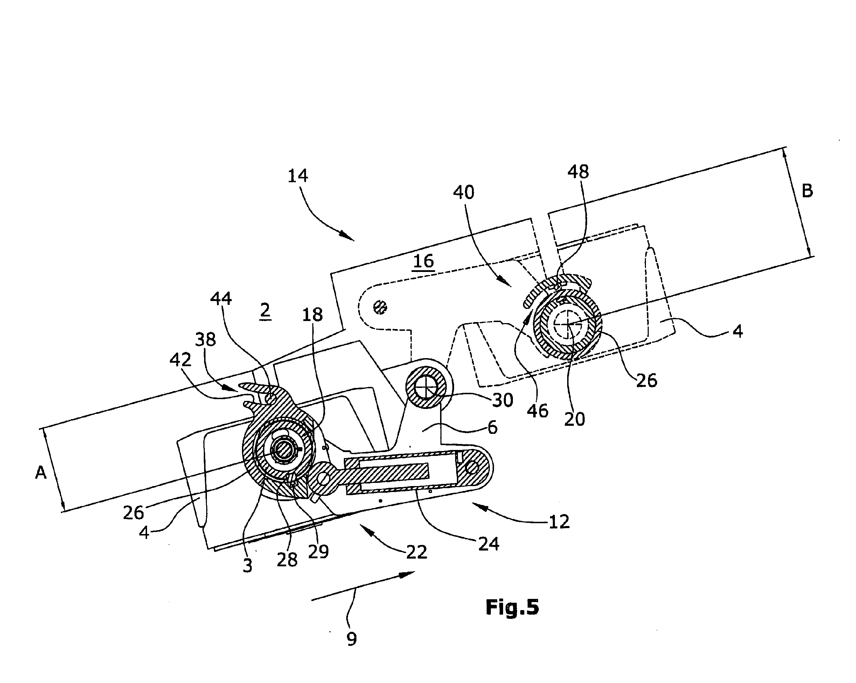

Fig. 5 zeigt einen Schnitt durch die Hubsäule 3 in zwei unterschiedlichen Ebenen des Lenkrings 26, der erste und zweite Verriegelungseinrichtungen 38,40 für die innere bzw. äußere Endpositionen 12,14 aufweist.

Der Einfachheit halber sind beide Endpositionen in Fig. 5 dargestellt. In der ersten äußeren Endposition 12 ist in Fig. 5 die Ankopplung des Lenkzylinders 24 an dem Lenkring 26 ersichtlich, der mit Hilfe eines Nutensteins 29 in die Nut 28 in den unteren Teil 18 der Hubsäule 3 eingreift. Durch Betätigung des Lenkzylinders 24 kann demzufolge der Lenkring 26 gedreht werden. Auf seiner zum Maschinenrahmen 2 zugewandten Seite weist der Lenkring 26 eine Aussparung 42 auf, die einen ortsfest am Maschinenrahmen 2 befestigten ersten Bolzen 44 aufnehmen kann. Die Aussparung 42 ist dabei so ausgerichtet, dass durch Betätigen der Lenkeinrichtung 22 der Bolzen 44 in die Aussparung 42 aufgenommen werden kann. Befindet sich der Bolzen 44 am Ende der Aussparung 42, ist das Laufwerk 4 parallel zur Fahrtrichtung 9 ausgerichtet und fixiert, wobei das Radlaufwerk dann auch einen seitlich definierten Abstand A von dem Maschinenrahmen 2 aufweist.

In der inneren zweiten Endposition 14 ist in einer zweiten orthogonal zur Längsachse 20 der Hubsäule 3 verlaufenden, beispielsweise unterhalb der Ebene der Aussparung 42 angeordneten Ebene das zweite Verriegelungselement 40 angeordnet, das aus einer bogenförmigen Aussparung 46 besteht, die an dem Lenkring 26 angeformt ist, und die mit einem ortsfest vom Maschinenrahmen 2 abstehenden Bolzen 48 im Eingriff sein kann.

Durch eine Betätigung der Lenkvorrichtung 22 kann auch in der zweiten Endposition 14 der Bolzen 48 in die Aussparung 46 eingefädelt werden. Der bogenförmige Verlauf der Aussparung 46 ist dergestalt, dass unabhängig von der aktuellen Position des zweiten Bolzens 48 das Laufwerk 4 stets den gleichen seitlichen Abstand B zum Maschinenrahmen 2 aufweist. Die Aussparung 46 ist demzufolge kreisbogenförmig mit einem Kreismittelpunkt in der Längsachse 20 der Hubsäule 3 gestellt.

In der zweiten inneren Endposition 14 ist es demzufolge möglich, die Hubsäule 3 in einem gleichbleibenden seitlichen Abstand von dem Maschinenrahmen 2 zu halten und dabei gleichzeitig das Laufwerk 4 zu lenken.

## Patentansprüche

1. Straßenfräsmaschine (1) zum Bearbeiten von Straßenbelägen,
- mit einer Steuerung für den Fahr-, Lenk- und Fräsbetrieb,
- mit einem über Hubsäulen (3) höhenverstellbaren Maschinenrahmen (2),
- mit einem Fahrwerk mit in Fahrtrichtung zumindest hinteren jeweils mit einem Fahrantrieb (36) versehenen Laufwerken (4), die an den unteren Enden (18) der eine Längsachse (20) aufweisenden Hubsäulen (3) angeordnet sind,
- mit einer am Maschinenrahmen (2) angeordneten, um eine Arbeitswalzenachse (7) drehbaren Arbeitswalze (5),
- mit einem um eine parallel zur Längsachse (20) einer Hubsäule (3) verlaufende Schwenkachse (30) schwenkbaren Schwenkarm (6), der eine hintere Hubsäule (3) mit dem Maschinenrahmen (2) schwenkbar verbindet und ein Laufwerk (4) von einer ersten, relativ zu dem Maschinenrahmen (2) seitlich vorstehenden äußeren Endposition (12) in eine zweite innere Endposition (14) und zurück überführt,
- mit einer Lenkeinrichtung (22) für das schwenkbare Laufwerk (4),
- mit einer ersten, auf den Schwenkarm (6) einwirkenden Antriebseinrichtung,
- mit einer zweiten auf die Lenkeinrichtung (22) einwirkenden Antriebseinrichtung, mit der ein Lenkwinkel des Laufwerks (4) einstellbar ist,
**dadurch gekennzeichnet, dass**
der Fahrantrieb (36) für das schwenkbare Laufwerk (4) die erste Antriebseinrichtung für die Schwenkbewegung des Schwenkarms (6) unter permanentem Bodenkontakt des Laufwerks (4) bildet.

2. Straßenfräsmaschine nach Anspruch 1, **dadurch gekennzeichnet, dass** der Fahrentrieb (36) für das schwenkbare Laufwerk (4) und der Lenkwinkel für das schwenkbare Laufwerk derart ansteuerbar sind, dass das Laufwerk (4) unter permanentem Bodenkontakt auf einem Kreisbogen (32) von der ersten, relativ zu dem Maschinenrahmen (2) vorstehenden äußeren Endposition (12) in die zweite innere Endposition (14) und zurück überführbar ist.

3. Straßenfräsmaschine nach Anspruch 1 oder 2,**dadurch gekennzeichnet, dass** die Steuerung zum Überführen des Laufwerks (4) von einer Endposition (12) in die andere (14) die Lenkeinrichtung (22) ansteuert, bis das Laufwerk (4) im Wesentlichen orthogonal zum Schwenkarm (6) ausgerichtet ist, in dieser Position den Fahrantrieb (36) ansteuert, um die Schwenkbewegung des Schwenkarms (6) zur anderen Endposition (14) auszuführen und in der anderen Endposition (14) erneut die Lenksteuerung ansteuert, um das Laufwerk (4) wieder in die Geradeausrichtung einzustellen.

4. Straßenfräsmaschine nach einem der Ansprüche 1 bis 3, **dadurch gekennzeichnet, dass** die schwenkbare Hubsäule (3) über einen einzigen Schwenkarm (6) mit dem Maschinenrahmen (2) gekoppelt ist.

5. Straßenfräsmaschine nach einem der Ansprüche 1 bis 4, **dadurch gekennzeichnet, dass** die Lenkachse des Laufwerks (4) zur Einstellung des Lenkwinkels koaxial oder parallel zur Längsachse (20) der Hubsäule (3) ist.

6. Straßenfräsmaschine nach einem der Ansprüche 1 bis 5, **dadurch gekennzeichnet, dass** die schwenkbare Hubsäule (3) in mindestens einer der Endpositionen (12,14) verriegelbar ist.

7. Straßenfräsmaschine nach einem der Ansprüche 1 bis 6, **dadurch gekennzeichnet, dass** das Laufwerk (4), die Hubsäule (3) oder die Lenkeinrichtung (22) erste, in der äußeren Endposition (12) mit dem Maschinenrahmen (2) zusammenwirkende Verriegelungseinrichtungen (38) aufweist, die sowohl den seitlichen Abstand A des Laufwerks (4) von dem Maschinenrahmen als auch den Lenkwinkel orthogonal zur Arbeitswalzenachse (7) fixieren.

8. Straßenfräsmaschine nach einem der Ansprüche 1 bis 7, **dadurch gekennzeichnet, dass** das Laufwerk (4), die Hubsäule (3) oder die Lenkeinrichtung (22) zweite, in der inneren Endposition (14) mit dem Maschinenrahmen (2) zusammenwirkende Verriegelungseinrichtungen (40) aufweist, die den seitlichen Abstand B des Laufwerks (4) von dem Maschinenrahmen (2) fixieren und die Einstellung eines Lenkwinkels zulassen.

9. Straßenfräsmaschine nach einem der Ansprüche 1 bis 8, **dadurch gekennzeichnet, dass** die erste und zweite Antriebseinrichtung das Laufwerk (4) von der ersten äußeren Endposition (12) in die zweite innere Endposition (14) und zurück unter Beibehaltung der Laufrichtung des Laufwerks in den Endpositionen (12,14) überführt.

10. Verfahren zum Ein- und Ausschwenken eines Laufwerks (4) einer Straßenfräsmaschine (1),
- mit einem über Hubsäulen (3) höhenverstellbaren Maschinenrahmen (2),
- mit einem Fahrwerk mit in Fahrtrichtung zumindest hinteren jeweils mit einem Fahrantrieb (36) versehenen Laufwerken (4), die an den unteren Enden (18) der Hubsäulen (3) angeordnet sind,
- mit einer am Maschinenrahmen (2) um eine Arbeitswalzenachse (7) drehbaren Arbeitswalze (5), mit einer Steuerung für den Fahr-, Lenk- und Fräsbetrieb, bei der zum Fräsen entlang von Hindernissen eine hintere, über einen Schwenkarm (6) mit dem Maschinenrahmen (2) verbundene Hubsäule (3) von einer ersten, relativ zu dem Maschinenrahmen (2) seitlich vorstehenden äußeren Endposition (12) für den normalen Fräsbetrieb in eine zweite innere Endposition (14) für kantennahes Fräsen überführt wird, und
- wobei ein Lenkwinkel für das schwenkbare Laufwerk (4) zumindest in der inneren Endposition (14) eingestellt werden kann,
**gekennzeichnet durch**
die Verwendung des Fahrantriebs (36) für das schwenkbare Laufwerk (4) zum Verschwenken des Schwenkarms (6) unter permanentem Bodenkontakt von einer Endposition (12;14) in die jeweils andere Endposition (14;12).

11. Verfahren nach Anspruch 10, **gekennzeichnet durch** das Steuern des Lenkwinkels und zumindest des Fahrantriebs (36) des schwenkbaren Laufwerks (4) derart, dass das Laufwerk (4) entlang eines Kreisbogens (32) mit dem Radius (34) des Schwenkarms (6) von der ersten, relativ zu dem Maschinenrahmen (2) vorstehenden äußeren Endposition (12) in die zweite innere Endposition (14) und zurück überführt werden kann.

12. Verfahren nach Anspruch 10 oder 11, **gekennzeichnet durch** das Überführen des Laufwerks (4) von einer Endposition (12,14) in die jeweils andere Endposition (14;12), indem zunächst das Laufwerk (4) im Wesentlichen orthogonal zum Schwenkarm (6) ausgerichtet wird, dann zumindest der Fahrantrieb (36) des schwenkbaren Laufwerks (4) angesteuert wird, um die Schwenkbewegung des Schwenkarms (6) zur anderen Endposition (14;12) auszuführen, und indem in der anderen Endposition (14;12) das Laufwerk (4) wieder in die Geradeausrichtung eingestellt wird.

13. Verfahren nach einem der Ansprüche 10 bis 12, **dadurch gekennzeichnet, dass** ein zur Lenkung mit der Hubsäule (3) zusammenwirkender Lenkring (26) zur Verriegelung des schwenkbaren Laufwerks (4) in den Endpositionen (12,14) verwendet wird.

14. Verfahren nach einem der Ansprüche 10 bis 13, **dadurch gekennzeichnet, dass** die schwenkbare Hubsäule (3) in den Endpositionen (12,14) durch ein Verschwenken des Laufwerks (4) um eine Lenkachse zur Einstellung des Lenkwinkels verriegelt wird.

15. Verfahren nach einem der Ansprüche 10 bis 14, **dadurch gekennzeichnet, dass** während des Schwenkvorgangs der schwenkbaren Hubsäule (3) zumindest der Fahrantrieb (36) des hinteren schwenkbaren Laufwerks (4) unter Vorwärts- oder Rückwärtsfahrt koordiniert angesteuert wird.

## Claims

1. Road milling machine (1) for the treatment of road surfaces,
- with a controller for the travelling, steering and milling operation,
- with a machine frame (2) height-adjustable via lifting columns (3),
- with a chassis with, as a minimum, rear traveling gear units (4) as seen in the direction of travel, each provided with a travel drive (36), where said traveling gear units (4) are arranged at the lower ends (18) of the lifting columns (3) having a longitudinal axis (20),
- with a working drum (5) arranged at the machine frame (2) to rotate about an axis (7) of the working drum,
- with a pivoting arm (6) pivotable about a pivoting axis (30) extending parallel to the longitudinal axis (20) of a lifting column (3), where said pivoting arm connects a rear lifting column (3) to the machine frame (2) in a pivotable fashion and transfers a traveling gear unit (4) from a first outer end position (12) projecting laterally relative to the machine frame (2) to a second inner end position (14) and back,
- with a steering device (22) for the pivotable traveling gear unit (4),
- with a first driving device acting on the pivoting arm (6),
- with a second driving device acting on the steering device (22), by means of which a steering angle of the traveling gear unit (4) is adjustable,
**characterized in that**
the travel drive (36) of the pivotable traveling gear unit (4) forms the first driving device for the pivoting movement of the pivoting arm (6) with the traveling gear unit (4) being in permanent contact with the ground surface.

2. Road milling machine in accordance with claim 1, **characterized in that** the travel drive (36) of the pivotable traveling gear unit (4) and the steering angle of the pivotable traveling gear unit can be driven in such a way that the traveling gear unit (4) is transferable on a circular arc (32) from the first outer end position (12) projecting relative to the machine frame (2) to the second inner end position (14) and back while being in permanent contact with the ground surface.

3. Road milling machine in accordance with claim 1 or 2, **characterized in that** the controller for transferring the traveling gear unit (4) from one end position (12) to the other (14) drives the steering device (22) until the traveling gear unit (4) is aligned essentially orthogonal to the pivoting arm (6), in this position drives the travel drive (36) in order to perform the pivoting movement of the pivoting arm (6) to the other end position (14), and in the other end position (14) once again drives the steering controller in order to readjust the traveling gear unit (4) to the straight-ahead position.

4. Road milling machine in accordance with one of the claims 1 to 3, **characterized in that** the pivotable lifting column (3) is coupled to the machine frame (2) via a single pivoting arm (6).

5. Road milling machine in accordance with one of the claims 1 to 4, **characterized in that** the steering axis of the traveling gear unit (4) for adjustment of the steering angle is coaxial or parallel to the longitudinal axis (20) of the lifting column (3).

6. Road milling machine in accordance with one of the claims 1 to 5, **characterized in that** the pivotable lifting column (3) is lockable in, as a minimum, one of the end positions (12, 14).

7. Road milling machine in accordance with one of the claims 1 to 6, **characterized in that** the traveling gear unit (4), the lifting column (3) or the steering device (22) comprises first locking mechanisms (38) interacting with the machine frame (2) in the outer end position (12), where said locking mechanisms (38) fix both the lateral distance A of the traveling gear unit (4) from the machine frame and the steering angle orthogonal to the axis (7) of the working drum.

8. Road milling machine in accordance with one of the claims 1 to 7, **characterized in that** the traveling gear unit (4), the lifting column (3) or the steering device (22) comprises second locking mechanisms (40) interacting with the machine frame (2) in the inner end position (14), where said locking mechanisms (40) fix the lateral distance B of the traveling gear unit (4) from the machine frame (2) and allow adjustment of a steering angle.

9. Road milling machine in accordance with one of the claims 1 to 8, **characterized in that** the first and second driving device transfers the traveling gear unit (4) from the first outer end position (12) to the second inner end position (14) and back while maintaining the direction of travel of the traveling gear unit (4) in the end positions (12,14).

10. Method for pivoting in and out a traveling gear unit (4) of a road milling machine (1),
- with a machine frame (2) height-adjustable via lifting columns (3),
- with a chassis with, as a minimum, rear traveling gear units (4) as seen in the direction of travel, each provided with a travel drive (36), where said traveling gear units (4) are arranged at the lower ends (18) of the lifting columns (3),
- with a working drum (5) arranged at the machine frame (2) to rotate about an axis (7) of the working drum, with a controller for the travelling, steering and milling operation, in which, for the purpose of milling along obstacles, a rear lifting column (3) connected to the machine frame (2) via a pivoting arm (6) is transferred from a first outer end position (12) projecting laterally relative to the machine frame (2) for the normal milling operation to a second inner end position (14) for close-to-edge milling, and
- where a steering angle for the slewable traveling gear unit (4) can be adjusted, as a minimum, in the inner end position (14),
**characterized by**
the use of the travel drive (36) of the pivotable traveling gear unit (4) to pivot the pivoting arm (6) from one end position (12;14) to the other end position (14; 12) respectively while being in permanent contact with the ground surface.

11. Method in accordance with claim 10, **characterized by** controlling the steering angle and, as a minimum, the travel drive (36) of the pivotable traveling gear unit (4) in such a way that the traveling gear unit (4) can be transferred, along a circular arc (32) having the radius (34) of the pivoting arm (6), from the first outer end position (12) projecting relative to the machine frame (2) to the second inner end position (14) and back.

12. Method in accordance with claim 10 or 11, **characterized by** transferring the traveling gear unit (4) from one end position (12;14) to the other end position (14; 12) respectively in that the traveling gear unit (4) is first aligned essentially orthogonal to the pivoting arm (6), then, as a minimum, the travel drive (36) of the pivotable traveling gear unit (4) is driven in order to perform the pivoting movement of the pivoting arm (6) to the other end position (14;12), and in that, in the other end position (14;12), the traveling gear unit (4) is readjusted to the straight-ahead position.

13. Method in accordance with one of the claims 10 to 12, **characterized in that** a steering ring (26) interacting with the lifting column (3) for the purpose of steering is used to lock the pivotable traveling gear unit (4) in the end positions (12,14).

14. Method in accordance with one of the claims 10 to 13, **characterized in that** the pivotable lifting column (3) is locked in the end positions (12,14) by pivoting the traveling gear unit (4) about a steering axis for adjustment of the steering angle.

15. Method in accordance with one of the claims 10 to 14, **characterized in that**, during the pivoting procedure of the pivotable lifting column (3), as a minimum the travel drive (36) of the rear pivotable traveling gear unit (4) is driven in a coordinated fashion while in forward or reverse travel.

## Revendications

1. Fraiseuse routière (1) destinée au traitement des revêtements de chaussées,
- avec une commande pour la propulsion et la direction de la machine, ainsi que pour les opérations de fraisage,
- avec un châssis de machine (2) réglable en hauteur par l'intermédiaire de colonnes de levage (3),
- avec un train de roulement doté de trains de roues (4), tout au moins à l'arrière, qui sont pourvus respectivement d'un mécanisme de roulement (36) dans la direction de la conduite, ces trains de roues (4) et sont disposés au niveau des extrémités inférieures (18) des colonnes de levage (3) présentant un axe longitudinal (20),
- avec un cylindre de travail (5), disposé au niveau du châssis de machine (2) et pouvant pivoter autour d'un axe du cylindre de travail (7),
- avec un bras de pivotement (6), pouvant être orienté autour d'un axe de pivotement (30) s'étendant parallèlement à l'axe longitudinal (20) d'une colonne de levage (3), et qui raccorde de manière orientable une colonne de levage (3), située à l'arrière, au châssis de machine (2) et qui déplace un train de roues (4) depuis une première position extérieure de fin de course (12), faisant saillie latéralement par rapport au châssis de machine (2), vers une deuxième position intérieure de fin de course (14), puis le ramène en position initiale,
- avec un système de direction (22) pour le train de roues (4) pouvant être orienté,
- avec un premier système d'entraînement agissant sur le bras de pivotement (6),
- avec un deuxième système d'entraînement, agissant sur le système de direction (22), et au moyen duquel un angle de braquage du train de roues (4) peut être réglé,
**caractérisée en ce que**
le mécanisme de roulement (36) pour le train de roues (4) pouvant être orienté forme le premier système d'entraînement pour le mouvement de pivotement du bras de pivotement (6), tout en maintenant le train de roues (4) en contact permanent avec le sol.

2. Fraiseuse routière (1) selon la revendication 1, **caractérisée en ce que**, d'une part, le mécanisme de roulement (36) pour le train de roues (4) pouvant être orienté et , d'autre part, l'angle de braquage pour le train de roues (4) pouvant être orientée peuvent être commandés de telle sorte que le train de roues, (4) peut être déplacé sur un arc de cercle (32), tout en restant en contact permanent avec le sol, depuis la première position extérieure de fin de course (12), faisant saillie par rapport au châssis de machine (2), vers la deuxième position intérieure de fin de course (14), puis ramené en position initiale.

3. Fraiseuse routière (1) selon la revendication 1 ou 2, **caractérisée en ce que** la commande destinée au déplacement du train de roues (4) commande premièrement le système de direction (22) depuis une position de fin de course (12) vers une autre position de fin de course (14), jusqu'à ce que le train de roues (4) soit aligné de manière essentiellement orthogonale par rapport au bras de pivotement (6), commande deuxièmement le mécanisme de roulement (36) dans cette position afin d'exécuter le mouvement de pivotement du bras de pivotement (6) vers l'autre position de fin de course (14) et commande à nouveau la commande de direction dans l'autre position de fin de course (14) afin de positionner de nouveau le train de roues (4) dans l'orientation rectiligne.

4. Fraiseuse routière (1) selon l'une des revendications 1 à 3, **caractérisée en ce que** la colonne de levage (3) pouvant être orientée est couplée au châssis de machine (2) par l'intermédiaire d'un seul et unique bras de pivotement (6).

5. Fraiseuse routière (1) selon l'une des revendications 1 à 4, **caractérisée en ce que** l'axe de direction du train de roues (4) destiné au réglage de l'angle de braquage est positionné de manière coaxiale ou parallèle par rapport à l'axe longitudinal (20) de la colonne de levage (3).

6. Fraiseuse routière (1) selon l'une des revendications 1 à 5, **caractérisée en ce que** la colonne de levage (3) pouvant être orientée peut être verrouillée dans au moins l'une des positions de fin de course (12 ; 14).

7. Fraiseuse routière (1) selon l'une des revendications 1 à 6, **caractérisée en ce que** le train de roues (4), la colonne de levage (3) ou le système de direction (22) présente des premiers systèmes de verrouillage (38), qui agissent de manière complémentaire avec le châssis de machine (2) dans la position extérieure de fin de course (12) et qui fixent aussi bien la distance latérale A du train de roues (4) par rapport au châssis de machine (2) que l'angle de braquage de manière orthogonale par rapport à l'axe du cylindre de travail (7).

8. Fraiseuse routière (1) selon l'une des revendications 1 à 7, **caractérisée en ce que** le train de roues (4), la colonne de levage (3) ou le système de direction (22) présente des deuxièmes systèmes de verrouillage (40), qui agissent de manière complémentaire, avec le châssis de machine (2) dans la position intérieure de fin de course (14), qui fixent la distance latérale B du train de roues (4) par rapport au châssis de machine (2) et qui autorisent le réglage d'un angle de braquage.

9. Fraiseuse routière (1) selon l'une des revendications 1 à 8, **caractérisée en ce que** le premier système d'entraînement et le deuxième système d'entraînement déplacent le train de roues (4) depuis la première position extérieure de fin de course (12) vers la deuxième position intérieure de fin de course (14) et le ramènent en position initiale, tout en maintenant la direction de roulement du train de roues dans les positions de fin de course (12 ; 14).

10. Procédé destiné au pivotement vers l'intérieur et vers l'extérieur d'un train de roues (4) d'une fraiseuse routière (1),
- avec un châssis de machine (2) réglable en hauteur par l'intermédiaire d'une colonne de levage (3),
- avec un train de roulement doté de trains de roues (4), tout au moins à l'arrière, qui sont pourvus respectivement d'un mécanisme de roulement (36) dans la direction de la conduite, et sont disposés au niveau des extrémités inférieures (18) des colonnes de levage (3),
- avec un cylindre de travail (5) qui peut pivoter autour d'un axe du cylindre de travail (7) au niveau du châssis de machine (2), avec une commande pour la propulsion et la direction de la machine, ainsi que pour les opérations de fraisage, pour laquelle, pour le fraisage le long d'obstacles, une colonne de levage (3), située à l'arrière et raccordée au châssis de machine (2) par l'intermédiaire d'un bras de pivotement (6), est déplacée depuis une première position extérieure de fin de course (12), faisant saillie latéralement par rapport au châssis de machine (2), pour les opérations normales de fraisage, vers une deuxième position intérieure de fin de course (14), pour les opérations de fraisage près des bordures, et
- où un angle de braquage peut être réglé pour le train de roues (4) pouvant être orienté, tout au moins dans la position intérieure de fin de course (14),
**caractérisé par**
l'utilisation du mécanisme de roulement (36) pour le train de roues (4) pouvant être orienté en vue du pivotement du bras de pivotement (6) depuis une position de fin de course (12 ; 14) vers l'autre position de fin de course respective (14 ; 12) tout en maintenant un contact permanent avec le sol.

11. Procédé selon la revendication 10, **caractérisé par** le pilotage de l'angle de braquage et tout au moins du mécanisme de roulement (36) du train de roues (4) pouvant être orienté, de telle sorte que le train de roues (4) peut être déplacé le long d'un arc de cercle (32), en utilisant le rayon (34) du bras de pivotement (6), depuis la première position extérieure de fin de course (12), faisant saillie par rapport au châssis de machine (2), vers la deuxième position intérieure de fin de course (14) et être ramené en position initiale.

12. Procédé selon la revendication 10 ou 11, **caractérisé par** le déplacement du train de roues (4) depuis une position de fin de course (12 ; 14) vers l'autre position de fin de course respective (14 ; 12), dans la mesure où le train de roues (4) est aligné dans un premier temps de manière essentiellement orthogonale par rapport au bras de pivotement (6), puis dans un deuxième temps, tout au moins le mécanisme de roulement (36) du train de roues (4) pouvant être orienté est commandé afin d'exécuter le mouvement de pivotement du bras de pivotement (6) vers l'autre position de fin de course (14 ; 12), et dans la mesure où le train de roues (4) est de nouveau réglé dans l'orientation rectiligne, dans l'autre position de fin de course (14 ; 12).

13. Procédé selon l'une des revendications 10 à 12, **caractérisé en ce qu'**une bague de direction (26), agissant de manière complémentaire avec la colonne de levage (3) et servant à assurer la direction, sert au verrouillage du train de roues (4) pouvant être orienté dans les positions de fin de course (12 ; 14).

14. Procédé selon l'une des revendications 10 à 13, **caractérisé en ce que** la colonne de levage (3) pouvant être orientée est verrouillée dans les positions de fin de course (12 ; 14) par un pivotement du train de roues (4) autour d'un axe de direction en vue de régler l'angle de braquage.

15. Procédé selon l'une des revendications 10 à 14, **caractérisé en ce que** pendant le processus de pivotement de la colonne de levage (3) pouvant être orientée, tout au moins le mécanisme de roulement (36) du train de roues (4) arrière pouvant être orienté peut être commandé de manière coordonnée en marche avant ou en marche arrière.
